# EUROPÄISCHE PATENTANMELDUNG

(11) **EP 2 433 823 A1**
(43) Veröffentlichungstag der Anmeldung: **28.03.2012**
(21) Anmeldenummer: 11005173.7
(22) Anmeldetag: 25.06.2011
(51) Int. Cl.: B60D 5/00

(54) **Gelenk eines Gelenkfahrzeugs**

(30) Priorität: 24.09.2010 DE 102010046495
(71) Anmelder: Hübner GmbH, D-34123 Kassel (DE)
(72) Erfinder: Scharf, Lothar, 37242 Bad Sooden-Allendorf (DE); Koch, Robert, 37242 Bad Sooden-Allendorf (DE)
(74) Vertreter: Walther, Walther & Hinz GbR

(57) **Zusammenfassung**

Gegenstand der Erfindung ist ein Gelenk eines Gelenkfahrzeugs umfassend zwei Gelenksegmente (1, 2), die durch mindestens einen Gelenkkörper (10) miteinander verbunden sind, wobei der Gelenkkörper (10) mindestens einen mit mindestens einer konkaven Oberfläche (15a, 15b) ausgebildeten Sattel (15) umfasst, der von dem einen ersten Gelenksegment aufgenommen ist, wobei der Gelenkkörper weiterhin mindestens eine Kalotte (11, 12) umfasst, die an dem anderen zweiten Gelenksegment (2) angeordnet ist, wobei die Kalotte (11, 12) mit ihrer konvexen Oberfläche (11a, 12a) auf den Sattel (15) mit der konkaven Oberfläche (15a, 15b) zugerichtet ist, wobei Kalotte (11, 12) und Sattel (15) durch einen Zapfen (30) miteinander in Verbindung stehen, wobei zwischen Sattel (15) und Kalotte (11, 12) ein Lagerkörper (20) mit mindestens einer Schicht (22, 23) aus einem Elastomer angeordnet ist,

## Beschreibung

Die Erfindung betrifft ein Gelenk eines Gelenkfahrzeugs, umfassend zwei Gelenksegmente, die durch mindestens einen Gelenkkörper miteinander verbunden sind gemäß dem Oberbegriff des Anspruchs 1.

Ein aus mehreren Teilen koppelbares Gelenkfahrzeug ist aus dem Stand der Technik hinreichend bekannt. Die Teile eines solchen Gelenkfahrzeugs sind durch ein Gelenk miteinander gekoppelt. Das Gelenk wird üblicherweise durch einen Balg überspannt, wobei zum Hinüberwechseln von Personen von dem einen zu dem anderen Fahrzeugteil eine Übergangsbrücke vorgesehen ist.

Der Begriff des Gelenks umfasst im vorliegenden Fall die gesamte Anordnung zwischen den beiden Fahrzeugteilen. Bekanntermaßen werden Gelenkfahrzeuge den unterschiedlichsten Bewegungsarten unterworfen. So müssen die Gelenke in der Lage sein, sowohl Wank-, Nick- als auch Knickbewegungen aufzunehmen. Unter Wankbewegungen versteht man solche Bewegungen, bei denen sich die beiden Fahrzeugteile relativ zueinander um eine Längsachse verdrehen. Knickbewegungen sind solche, die Auftreten, wenn das Gelenkfahrzeug mit den beiden Fahrzeugteilen um eine Kurve fährt, wohingegen Nickbewegungen entstehen, wenn ein solcher Gelenkzug durch eine Senke oder über eine Kuppe fährt.

Eine bekannte Gelenkverbindung, die die oben genannten Bewegungsarten, und auch übergelagerte Bewegungsarten zulässt, umfasst ein sogenanntes Drehkranzgelenk mit zwei drehbar ineinander gelagerten Ringen, wobei einer der Ringe, meist der innere Ring, dem vorderen Wagen und der zweite Ring, meist der äußere Ring, dem hinteren Wagen zugeordnet ist. Hierbei stützt sich der äußere Ring auf dem inneren Ring ab, wobei die beiden Ringe um eine vertikale Achse gegeneinander verdrehbar sind, um Knickbewegungen beider Fahrzeuge nachgeben zu können, wenn das Fahrzeug zum Beispiel eine Kurve durchfährt.

Nickbewegungen werden dadurch ermöglicht, dass eines der beiden Fahrzeugteile an einem der beiden Drehringe um quer zur Fahrzeuglängsachse gerichtete gummigelagerte Bolzengelenke angeschlossen ist. Meist ist dies der vordere Wagen, der durch solche Metallgummilager mit dem entsprechenden Drehring des Drehkranzgelenkes verbunden ist.

Vorteilhaft sind insofern beiderseits der Mittellängsachse zwei Metallgummilager vorgesehen, die jeweils einen Achsbolzen aufweisen, der quer zur Längsachse des Fahrzeuges ausgerichtet ist. Der Achsbolzen ist von einer Gummihülse umgeben, die von einem Hülsenmantel umgeben ist, wobei der Achsbolzen die Verbindung mit einem Drehring herstellt, und die Hülse die Verbindung mit dem Fahrzeugteil. Auftretende Wankbewegungen werden zum einen von dem Fahrzeugchassis, zum anderen von dem Metallgummilager aufgenommen.

Aus der EP 1916181 ist des Weiteren ein Knickgelenk bekannt, das zwei Gelenksegmente aufweist, wobei die beiden Gelenksegmente durch ein Knicklager miteinander in Verbindung stehen. Das eine Gelenksegment ist hierbei an dem einen Wagenkasten befestigt, wohingegen das andere Gelenksegment mit dem gegenüberliegenden Wagenkasten verbunden ist. Das andere Gelenksegment umfasst zur Zulassung von Nick- und Wankbewegungen einen sogenannten Wankgelenkkörper, der von einer Gehäusehülse aufgenommen ist. Hierzu besitzt der Wankgelenkkörper einen nach Art einer Olive ausgebildeten Gelenkkörper, der durch zwei Elastomerkissen durch die Gehäusehülse aufgenommen wird. Der Wankgelenkkörper zeigt zu beiden Enden Achsstummel, durch die der Wankgelenkkörper und mithin das gesamte Lager am Wagenkasten befestigt ist. Dieses kombinierte Nick- und Wanklager ist, wie dies der Name bereits ausdrückt, aufgrund der elastisch nachgiebigen Lagerung des Wank-Gelenkkörpers in der Gehäusehülse in der Lage, sowohl Wankals auch Nickbewegungen nachgeben zu können. Eine ähnliche Ausgestaltung ist aus der EP 1916180 bekannt. Die beiden zuletzt genannten Gelenke sind bereits relativ preiswert herstellbar, und sie sind insbesondere einsetzbar bei Fahrzeugen, bei denen große Knickwinkel zugelassen sind, wie dies beispielsweise bei Bussen der Fall ist. Bei Schienenfahrzeugen hingegen werden geringere Knickwinkel verlangt.

In der DE 20 2006 004 643 U1 ist ein Gelenk der gattungsbildenden Art beschrieben. Hier sind zwei Gelenksegmente eines Gelenks eines Gelenkfahrzeugs bekannt, die durch einen Gelenkkörper miteinander in Verbindung stehen. Der Gelenkkörper umfasst eine auf einem Zapfen angeordnete Kalotte, wobei der Zapfen mit dem einen Gelenksegment in Verbindung steht. Das andere Gelenksegment zeigt einen Sattel mit einer korrespondierend zur Kalotte ausgebildeten konkaven Oberfläche, wobei der Sattel die Kalotte aufweist.

Die der Erfindung zugrunde liegende Aufgabe besteht nunmehr darin, ein Gelenk bereitzustellen, das in der Lage ist, allen auftretenden Fahrbewegungen folgen zu können, wie beispielsweise Wank-, Nick- und Knickbewegungen sowie auch überlagerten Bewegungen dieser zuvor genannten Bewegungsarten, und das darüber hinaus äußerst preiswert herstellbar ist. Insbesondere soll der Aufbau konstruktiv einfach gestaltet sein und aus wenigen Teilen bestehen.

Zur Lösung der Aufgabe wird erfindungsgemäß bei einem Gelenk für ein Gelenkfahrzeug der eingangs genannten Art vorgeschlagen, dass zwischen Sattel und Kalotte ein Lagerkörper mit mindestens einer Schicht aus einem Elastomer angeordnet ist. Hieraus wird deutlich, dass das Gelenk im eigentlichen Sinne keine drehbeweglichen Teile aufweist, wie dies beim Stand der Technik der Fall ist, vielmehr wird die Knickbewegung zwischen den beiden Fahrzeugteilen eines Gelenkfahrzeuges allein durch den Elastomerteil ermöglicht. Gegenstand der Erfindung ist somit ein sphärisches Lager, wobei zwischen der Kalotte als einem Teil des sphärischen Lagers und dem Sattel als zweiten Teil des sphärischen Lagers ein elastisches Zwischenglied vorgesehen ist, wobei das elastische Zwischenglied zwischen Kalotte einerseits und Sattel andererseits eingespannt ist. Hierbei wird die Knickbewegung zwischen den beiden Fahrzeugteilen eines Gelenkfahrzeugs allein durch den Lagerkörper mit mindestens einer Schicht aus einem Elastomer ermöglicht. Durch diese Elastomerschicht werden nicht nur die Knickbewegungen aufgenommen, sondern gleichfalls auch Wank- und Nickbewegungen, wie sie zwischen zwei gelenkig miteinander verbundenen Fahrzeugen auftreten, wie dies bereits zuvor beschrieben worden ist. Der erfindungsgemäße Gelenkkörper ist äußerst preiswert in der Herstellung und darüber hinaus robust, sodass er sich insbesondere auch zum Einsatz bei Gelenkbussen bzw. auch zum Einsatz bei Schienenfahrzeugen eignet.

Vorteilhafte Merkmale und Ausgestaltungen zu der Erfindung sind den Unteransprüchen zu entnehmen.

So ist insbesondere nach einer vorteilhaften Ausführungsform vorgesehen, dass der Gelenkkörper zu beiden Seiten jeweils eine Kalotte aufweist, wobei zwischen den Kalotten der Sattel vorgesehen ist, der zu beiden Seiten eine konkav gewölbte Oberfläche aufweist, wobei jeweils zwischen Kalotte und Sattel der Lagerkörper mit mindestens einer Schicht aus einem Elastomer angeordnet ist, wobei die beiden Kalotten durch den Zapfen verbunden sind. Hieraus ergibt sich einerseits ein absolut symmetrisches Lager, wobei darüber hinaus aufgrund der beiden Lagerkörper zu beiden Seiten des Sattels zwischen den beiden Kalotten verhältnismäßig große Knickwinkel zur Verfügung gestellt werden, wobei gleichfalls Wank- und Nickbewegungen in erheblichen Umfange zugelassen werden.

Im Einzelnen ist des Weiteren vorgesehen, dass der Radius der konkav gewölbten Oberfläche des Sattels unterschiedlich zu dem Radius der konvex gewölbten Oberfläche der Kalotte ist. Insbesondere ist in diesem Zusammenhang vorgesehen, dass der Radius der Kalotte kleiner als der Radius des Sattels ist. Hierdurch besteht die Möglichkeit den Lagerkörper mit der mindestens einen Schicht aus einem Elastomer, der zwischen Kalotte und Sattel angeordnet ist, zum äußeren Randbereich hin dicker auszugestalten. Dies ist insofern von Vorteil, als man bestrebt ist, in den Elastomerschichten die Spannungen in der Schicht über die gesamte Fläche konstant zu halten. Da die Spannungen bei Belastungen im äußeren Randbereich naturgemäß größer sind als im inneren Randbereich, findet durch eine Vergrößerung des Volumens der Elastomerschicht im äußeren Randbereich eine Verminderung der Spannungen dort statt, sodass die Spannungen in der Elastomerschicht im Wesentlichen überall gleich sind.

Nach einem besonders vorteilhaften Merkmal der Erfindung ist vorgesehen, dass der Elastomerkörper mindestens zwei Elastomerschichten umfasst, wobei zwischen den Schichten ein gewölbter Teller angeordnet ist, wobei der Radius der Wölbung des Tellers größer als der der Kalotte aber kleiner als der des Sattels ist. Hieraus ergibt sich unmittelbar, dass oberhalb und unterhalb des Tellers jeweils eine Elastomerschicht vorgesehen ist, wobei die untere Elastomerschicht stärker ist als die obere Elastomerschicht. Insbesondere im Randbereich ist die untere Elastomerschicht stärker als die obere. Vorteilhaft ist die Schicht unterhalb des Tellers dicker, als die Schicht oberhalb des Tellers. Diese asymmetrische Teilung der beiden Elastomerschichten durch den Teller ist ebenfalls der Maßgabe geschuldet, dass die Spannungen in den beiden Elastomerschichten im Wesentlichen über Erstreckung der Elastomerschicht gleich sein sollen. Gleichfalls wird durch die Anordnung zweier oder auch gegebenenfalls mehrerer Elastomerschichten und entsprechend mehrerer Teller nicht nur eine Erhöhung des Knickwinkels ermöglicht, sondern es können auch größere Wank- und Nickbewegungen bewerkstelligt werden. Die Elastomerschichten sind hierbei mit dem Teller z. B. durch Vulkanisation fest verbunden.

Zur Bereitstellung größerer Knickwinkel ohne Beschädigung des Lagerkörpers mit der mindestens Elastomerschicht ist nach einem besonders vorteilhaften Merkmal zwischen der Kalotte und Elastomerschicht keine feste Verbindung, wie z. B. durch Vulkanisation, vorgesehen, sondern vielmehr soll ein Gleiten der Teile aufeinander ermöglicht werden. In Abhängigkeit von der Vorspannung, die auf den Lagerkörper durch die Verbindung zwischen Kalotte und Sattel aufgebracht wird, ist ein Losbrechmoment einstellbar, bei welchem der Lagerkörper und die Kalotte oder Sattel und Lagerkörper sich relativ zueinander gleitend bewegen. Hierdurch wird der Zerstörung der Elastomerschichten des Lagerkörpers bei großen Knickwinkeln vorgebeugt. Im Einzelnen kann vorteilhaft vorgesehen sein, zwischen Lagerkörper einerseits und Kalotte und/oder Sattel andererseits eine Gleitschicht, z. B. aus Teflon vorzusehen, um hierdurch das Losbrechmoment bei Belastung des Gelenks während der Kurvenfahrt beeinflussen zu können.

Grundsätzlich gilt, dass eine gleitende Relativbewegung zwischen Kalotte und Lagerkörper und/oder zwischen Sattel und Lagerkörper nur für den Fall zugelassen werden soll, dass die Belastung für die mindestens eine Elastomerschicht so groß wird, dass ein Reißen und damit eine Zerstörung des Lagerkörpers zu befürchten ist. Grundsätzlich kann natürlich der Lagerkörper mit der Kalotte und/oder dem Sattel auch fest verbunden sein, z. B. durch Vulkanisation, wenn die Knickwinkel immer in dem für den Lagerkörper erträglichen Bereich bleiben.

Es wurde bereits an anderer Stelle erläutert, dass ein Problem bei der Verwendung von Elastomerschichten bei der Herstellung von Lagerkörpern für ein Gelenk darin besteht, dass die Spannungen in den einzelnen Elastomerschichten im Wesentlichen gleich gehalten werden sollen. Das heißt, dass die Spannungen in den jeweiligen Elastomerschichten im Wesentlichen an allen Stellen sein sollten. Dem wird nach einem weiteren Merkmal der Erfindung dadurch Rechnung getragen, dass die mindestens eine Elastomerschicht im Randbereich eine konkave Wölbung aufweist. Werden die Elastomerschicht oder Elastomerschichten z. B. während der Fahrt eines solchen Gelenkfahrzeuges belastet, dann besteht in Abhängigkeit von der jeweiligen Belastungsart immer eine Wahrscheinlichkeit, dass die jeweilige Elastomerschicht an einer Seite be-und an der anderen Seite entlastet wird, also asymmetrisch belastet wird. Bei einer Belastung hat die belastete Elastomerschicht das Bestreben nach außen auszubauchen. Durch eine im Ruhezustand vorgesehene konkave Wölbung der Elastomerschicht wird erreicht, dass diese selbst bei Belastung keine konvexe Wölbung nach außen bildet; konvex gewölbte Außenseiten einer Elastomerschicht bergen die Gefahr der Rissbildung, da im konvexen Wölbungsbereich die Spannungen steigen. Gleiches gilt aus den gleichen Gründen auch für die Ausbildung einer konkaven Wölbung in der mindestens einen Elastomerschicht zapfenseitig ist.

Ein weiteres Merkmal zeichnet sich dadurch aus, dass der Abstand zwischen den Kalotten durch eine Distanzhülse festlegbar ist. Hierdurch wird erreicht, dass die Montage insofern erleichtert wird, als der Lagerkörper nur bis zu einem bestimmten Wert vorgespannt werden kann.

Darüber hinaus ist vorgesehen, dass der Lagerkörper einen radialen Abstand zum Zapfen oder der Distanzhülse aufweist. Dies, um sicher zu stellen, dass bei axialer Belastung, wie sie beim Bremsen und Anfahren auftritt, der Lagerkörper nicht an der Hülse oder an dem Zapfen anliegt. Insofern ist auch vorgesehen, dass der Sattel einen radialen Abstand zum Zapfen oder der Distanzhülse aufweist, um, wie bereits ausgeführt, beim Abbremsen oder Beschleunigen des Fahrzeugs zu verhindern, dass der Sattel zentrisch an die Distanzhülse oder den Zapfen anschlägt. Hieraus wird deutlich, dass der Sattel vom Grundsatz her schwimmend in dem Gelenkkörper gelagert ist. Der Abstand ist hierbei so bemessen, dass bei einem Anliegen der Teile des Gelenkkörpers an dem Zapfen oder der Hülse die Spannungen in der oder den Elastomerschichten so ist, dass diese nicht reißen.

Weiterhin ist nach einem Merkmal der Erfindung vorgesehen, dass der Zapfen als Schraubbolzen ausgebildet ist, wobei die eine Kalotte ein Gewinde für den Schraubbolzen aufweist.

Anhand der Zeichnungen wird die Erfindung nachstehend beispielhaft näher erläutert.
- Figur 1: zeigt eine Seitenansicht auf das erfindungsgemäße Gelenk;
- Figur 2: zeigt eine Draufsicht;
- Figur 3: zeigt einen Schnitt gemäß der Linie III-III aus Figur 2.

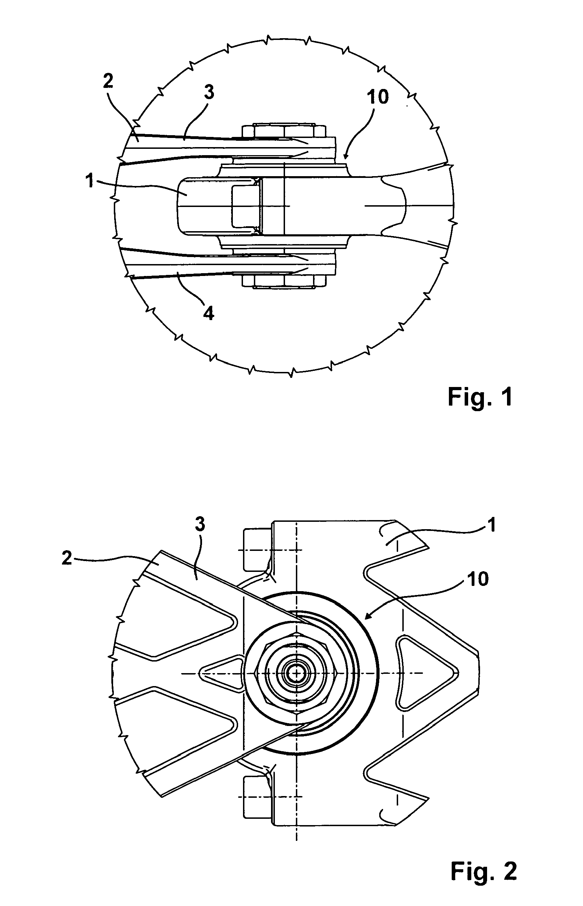

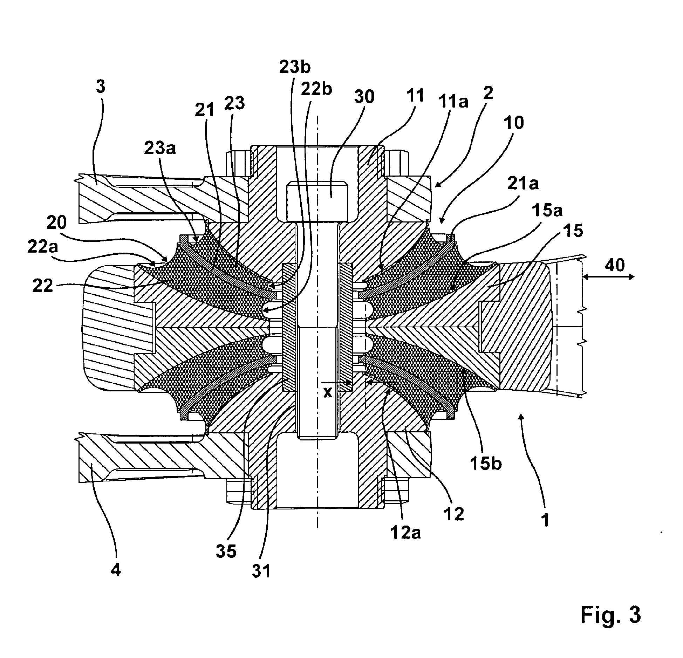

Gemäß Figur 1 ist das erste Gelenksegment mit 1 und das zweite Gelenksegment mit 2 bezeichnet. Das erste Gelenksegment befindet sich zwischen den Schenkeln 3 und 4 des zweiten Gelenksegmentes 2. Die Verbindung des ersten Gelenksegmentes mit dem zweiten Gelenksegment erfolgt über den mit 10 bezeichneten Gelenkkörper. Der die Verbindung zwischen den beiden Gelenksegmenten 1 und 2 bildende Gelenkkörper 10 wird im Folgenden nunmehr anhand von Figur 3 beschrieben.

Der Gelenkkörper 10 umfasst die beiden Kalotten 11 und 12. Zwischen den beiden Kalotten 11 und 12 befindet sich der mit 15 bezeichnete Sattel. Der Sattel 15 weist zwei konkav gewölbte Oberflächen 15a und 15b auf, die der konvex gewölbten Oberfläche 11a, 12a der jeweiligen Kalotte 11, 12 zugerichtet sind. Zwischen der konvex gewölbten Oberfläche 11a der Kalotte 11 bzw. der konvex gewölbten Oberfläche 12a der Kalotte 12 und dem Sattel 15 befindet sich jeweils der mit 20 bezeichneter Lagerkörper. Der Lagerkörper 20 zeigt einen gewölbten Teller 21, wobei auf der Ober-und auf der Unterseite des Tellers 21 jeweils eine Elastomerschicht 22, 23 angeordnet sind. Die beiden Elastomerschichten sind mit dem Teller 21 durch Vulkanisation verbunden. Die Elastomerschicht 22 ist dicker ausgebildet, als die Elastomerschicht 23.

Der Grund hierfür ist darin zu finden, dass die untere Elastomerschicht konstruktionsbedingt höheren Kräften ausgesetzt ist, als die obere Schicht. Um die Spannungen dennoch in einem für das Elastomer erträglichen Bereich zu halten, ist die unterschiedliche Dimension der Elastomerschichten vorgenommen worden. Sowohl die Elastomerschicht 22 als auch die Elastomerschicht 23 weisen im Randbereich (Pfeile 22a, 23a bzw. 22b, 23b) eine konkave Wölbung auf, die dafür sorgt, dass bei einem Zusammenpressen des Lagerkörpers die Elastomerschichten keine konvexe Wölbung erfahren, da bei einer konvexen Auswölbung der Schichten unter Last eher mit einer Rissbildung zu rechnen ist, als bei einer konkaven Wölbung. Dies gilt sowohl im Außen- als auch im Innenbereich der Schichten.

Die beiden Kalotten 11, 12 sind durch einen Schraubbolzen 30 zusammengehalten. Zur Aufnahme des Schraubbolzens besitzt die eine Kalotte, nämlich die Kalotte 12, ein Gewinde 31. Die beiden Kalotten sind über eine Distanzhülse 35 miteinander verbunden. Die Distanzhülse 35 sorgt dafür, dass für die Montage der Lagerkörper 20 mit den Elastomerschichten 22, 23 nicht über ein bestimmtes Maß hinaus durch die Kalotten zusammengepresst wird. Zwischen dem Lagerkörper 20 und der Kalotte und/oder dem Sattel 15 kann eine Gleitschicht 25 aus z. B. Teflon vorgesehen sein. Die Gleitschicht sorgt für ein Gleiten der Körper relativ zueinander, wenn das durch den Knickwinkel zwischen den Fahrzeugteilen erzeugte Moment zwischen Kalotte und Sattel größer ist, als das Losbrechmoment zwischen Kalotte/Sattel und der Elastormerschicht (en) des Lagerkörpers, um eine Zerstörung des Lagerkörpers 20, und hier im speziellen der Elastomerschicht (en), zu verhindern. Das heißt, die Gleitschicht sorgt bei extremer Belastung dafür, dass der Lagerkörper keinen Schaden nimmt. Gleichfalls dient die Distanzhülse auch als Anschlag für den Teller 21, den Sattel 15 und die beiden Elastomerschichten 22, 23 zu beiden Seiten des Tellers 21. Der Teller 21 zeigt eine Umbörtelung 21 a, die zur Aufnahme im Vulkanisationswerkzeug dient.

Die Kalotten 11, 12 liegen an der Distanzhülse 35 an. Dies im Gegensatz zu dem Lagerkörper 20 und dem Sattel 15. Der Sattel 15 weist einen Abstand x zur Hülse auf, ebenso wie der Teller 21 einen radialen Abstand zur Distanzhülse 35 zeigt. Auch die Elastomerschichten 22, 23 zeigen einen solchen Abstand zur Distanzhülse. Beim Bremsen und Anfahren des Fahrzeuges hat der Lagerkörper 20, der auf dem Sattel 15 aufsitzt, der wiederum mit dem ersten Gelenksegment in Verbindung steht, das Bestreben in Richtung des Pfeiles 40 auszuweichen. Um zu verhindern, dass die Teile des Lagerkörpers 20 und des Sattels 15 in Kontakt mit der Distanzhülse 35 gelangen, sind die zuvor beschriebenen Abstände vorgesehen. Allerdings gilt für die Bemessung des Abstandes "x", dass dieser gerade so groß gewählt wird, dass bei einem Anliegen der Elastomerschichten an der Hülse die Spannungen nicht so hoch werden, dass die Gefahr der Rissbildung besteht.

### Bezugszeichenliste:

- 1: erstes Gelenksegment
- 2: zweites Gelenksegment
- 3: Schenkel des ersten Gelenksegments
- 4: Schenkel des zweiten Gelenksegments
- 10: Gelenkkörper
- 11: Kalotte
- 11 a: Wölbung der Kalotte
- 12: Kalotte
- 12a: Wölbung der Kalotte
- 15: Sattel
- 15a: konkave Wölbung
- 15b: konvexe Wölbung
- 20: Lagerkörper
- 21: Teller
- 22: Elastomerschicht
- 22a: äußere Wölbung der Elastomerschicht
- 22b: innere Wölbung der Elastomerschicht
- 23: Elastomerschicht
- 23a: äußere Wölbung der Elastomerschicht
- 23b: innere Wölbung der Elastomerschicht
- 25: Gleitschicht
- 30: Schraubbolzen
- 31: Gewinde für Schraubbolzen
- 35: Distanzhülse
- 40: Doppelpfeil

## Patentansprüche

1. Gelenk eines Gelenkfahrzeugs umfassend zwei Gelenksegmente (1, 2), die durch mindestens einen Gelenkkörper (10) miteinander verbunden sind, wobei der Gelenkkörper (10) mindestens einen mit mindestens einer konkaven Oberfläche (15a, 15b) ausgebildeten Sattel (15) umfasst, der von dem einen ersten Gelenksegment aufgenommen ist, wobei der Gelenkkörper weiterhin mindestens eine Kalotte (11, 12) umfasst, die an dem anderen zweiten Gelenksegment (2) angeordnet ist, wobei die Kalotte (11, 12) mit ihrer konvexen Oberfläche (11a, 12a) auf den Sattel (15) mit der konkaven Oberfläche (15a, 15b) zugerichtet ist, wobei Kalotte (11, 12) und Sattel (15) durch einen Zapfen (30) miteinander in Verbindung stehen,
**dadurch gekennzeichnet,**
**dass** zwischen Sattel (15) und Kalotte (11, 12) ein Lagerkörper (20) mit mindestens einer Schicht (22, 23) aus einem Elastomer angeordnet ist,

2. Gelenk eines Gelenkfahrzeugs nach Anspruch 1,
**dadurch gekennzeichnet,**
**dass** der Gelenkkörper (10) zu beiden Seiten jeweils eine Kalotte (11, 12) aufweist, wobei zwischen den Kalotten (11, 12) der Sattel (15) vorgesehen ist, der zu beiden Seiten eine konkav gewölbte Oberfläche (15a, 15b) aufweist, wobei jeweils zwischen Kalotte und Sattel (15) der Lagerkörper (20) mit der mindestens einen Schicht (22, 23) aus einem Elastomer angeordnet ist, wobei die beiden Kalotten (11, 12) durch den Zapfen (30) verbunden sind.

3. Gelenk eines Gelenkfahrzeuges nach Anspruch 1 oder Anspruch 2, **dadurch gekennzeichnet,**
**dass** der Radius der konkav gewölbten Oberfläche (15a, 15b) des Sattels (15) unterschiedlich zu dem Radius der konvex gewölbten Oberfläche (11 a, 12a) der Kalotte (11, 12) ist.

4. Gelenk eines Gelenkfahrzeuges nach einem der voranstehenden Ansprüche,
**dadurch gekennzeichnet,**
**dass** der Radius der konvex gewölbten Oberfläche (11a, 12a) der Kalotte (11, 12) kleiner als der Radius der konkav gewölbten Oberfläche des Sattels (15) ist.

5. Gelenk eines Gelenkfahrzeuges nach einem der voranstehenden Ansprüche,
**dadurch gekennzeichnet,**
**dass** der Lagerkörper (20) mindestens zwei Elastomerschichten (22, 23) umfasst, wobei zwischen den Schichten(22, 23) ein gewölbter Teller (21) angeordnet ist, wobei der Radius der Wölbung des Tellers (21) größer ist als der der Kalotte (11, 12) aber kleiner als die der konkav gewölbten Oberfläche (15a, 15b) des Sattels (15) ist.

6. Gelenk eines Gelenkfahrzeuges nach einem der voranstehenden Ansprüche,
**dadurch gekennzeichnet,**
**dass** die Elastomerschichten (22, 23) mit dem Teller (21) fest verbunden sind.

7. Gelenk eines Gelenkfahrzeuges nach einem der voranstehenden Ansprüche,
**dadurch gekennzeichnet,**
**dass** die mindestens eine Elastomerschicht (22, 23) mit der Kalotte (11, 12) fest verbunden ist.

8. Gelenk eines Gelenkfahrzeuges nach einem der voranstehenden Ansprüche,
**dadurch gekennzeichnet,**
**dass** die Kalotte (11, 12) und/oder der Sattel (15) relativ zum Lagerkörper (20) gleitend beweglich ist.

9. Gelenk eines Gelenkfahrzeuges nach Anspruch 8,
**dadurch gekennzeichnet,**
**dass** zwischen Lagerkörper (20) und Kalotte (11, 12) und/oder Sattel eine Gleitschicht (25) vorgesehen ist.

10. Gelenk eines Gelenkfahrzeuges nach einem der voranstehenden Ansprüche,
**dadurch gekennzeichnet,**
**dass** die mindestens eine Elastomerschicht (22, 23) im Randbereich eine konvexe Wölbung (22a, 23a, 22b, 23b) aufweist.

11. Gelenk eines Gelenkfahrzeuges nach Anspruch 2
**dadurch gekennzeichnet,**
**dass** der Abstand zwischen den Kalotten (11, 12) durch eine Distanzhülse (35) festlegbar ist.

12. Gelenk eines Gelenkfahrzeuges nach einem der voranstehenden Ansprüche,
**dadurch gekennzeichnet,**
**dass** der Lagerkörper (20) einen radialen Abstand zum Zapfen (30) oder der Distanzhülse (35) aufweist.

13. Gelenk eines Gelenkfahrzeuges nach einem der voranstehenden Ansprüche,
**dadurch gekennzeichnet,**
**dass** der Sattel (15) einen radialen Abstand zum Zapfen (30) oder der Distanzhülse (35) aufweist.

14. Gelenk eines Gelenkfahrzeuges nach einem der voranstehenden Ansprüche,
**dadurch gekennzeichnet,**
**dass** Zapfen (30) als Schraubbolzen ausgebildet ist, wobei die eine Kalotte (12) ein Gewinde (31) für den Schraubbolzen aufweist.

15. Gelenk eines Gelenkfahrzeuges nach einem der voranstehenden Ansprüche,
**dadurch gekennzeichnet,**
**dass** das erste Gelenksegment zwischen den Schenkeln des anderen zweiten im Querschnitt U-förmigen Gelenksegmentes durch den Gelenkkörper (10) gehalten ist.
